# FASCICULE DE BREVET EUROPEEN

(11) **EP 1 450 934 B1**
(45) Date de publication et mention de la délivrance du brevet: **29.01.2020**
(21) Numéro de dépôt: 02804245.5
(22) Date de dépôt: 04.12.2002
(51) Int. Cl.: B01D 53/14

(54) **PROCEDE POUR LE TRAITEMENT DE GAZ EFFLUENT CONTENANT DES HYDROCARBURES**
VERFAHREN ZUR BEHANDLUNG VON KOHLENWASSERSTOFFE ENTHALTENDEM RAUCHGAS
METHOD FOR TREATING FLUE GAS CONTAINING HYDROCARBONS

(30) Priorité: 05.12.2001 FR 0115697
(43) Date de publication de la demande: 01.09.2004
(73) Titulaire: Safran Ceramics, 33185 Le Haillan (FR)
(72) Inventeur: BAUDRY, Yvan, 33700 MERIGNAC (FR); LAMBERT, Jean-Pierre, 33200 BORDEAUX (FR); DELPERIER, Bernard, 33127 MARTIGNAS SUR JALLES (FR); POTIN, Jean-François, 77370 FONTENAILLES (FR)
(74) Mandataire: Cabinet Beau de Loménie
(86) Numéro de dépôt international: PCT/FR2002/004169
(87) Numéro de publication internationale: WO 2003/047725

(56) Documents cités:
- WO-A-98/01216
- WO-A-98/03247
- GB-A- 790 987

## Description

### Arrière-plan de l'invention

L'invention concerne le traitement de gaz effluent contenant des hydrocarbures aromatiques polycycliques.

Le domaine d'application de l'invention est plus particulièrement celui du traitement de gaz effluent produit par des installations industrielles de dépôt ou infiltration chimique en phase vapeur pour la formation de dépôt de carbone pyrolytique sur des substrats ou pour la densification de substrats poreux par une matrice de carbone pyrolytique.

De telles installations sont très bien connues. Des substrats à revêtir ou à densifier par du carbone pyrolytique sont placés dans un four dans lequel un gaz réactif contenant un ou plusieurs précurseurs du carbone est introduit. Le gaz précurseur est un hydrocarbure, typiquement du méthane, du propane ou un mélange des deux. La pression et la température dans le four sont réglées pour produire le revêtement ou la matrice de carbone pyrolytique par décomposition (craquage) du gaz précurseur au contact des substrats. Le gaz effluent contenant des sous-produits de réaction est extrait du four par pompage de façon continue.

Les sous-produits de réaction comprennent des composés organiques qui ont une température de solidification assez élevée, en particulier des hydrocarbures aromatiques polycycliques (HAP) tels que, notamment, le naphtalène, le pyrène, l'anthracène, l'acénaphtylène,... Par condensation, ces sous-produits de réaction forment des goudrons qui ont tendance à se déposer dans les canalisations de sortie du four lorsque le gaz effluent se refroidit. Ces goudrons se retrouvent également dans le dispositif de pompage, par exemple dans l'huile de pompes à vide ou dans les condensats d'éjecteur à vapeur.

Des problèmes similaires peuvent être rencontrés avec des installations industrielles autres que des fours de dépôt ou d'infiltration chimique en phase gazeuse utilisant des hydrocarbures comme gaz réactif, par exemple des fours de cémentation.

On connait WO 98/01216 qui décrit un procédé et dispositif d'épuration des fumées.

### Objet et résumé de l'invention

L'invention a pour but de fournir un procédé de traitement de gaz effluent contenant des goudrons, en particulier des hydrocarbures aromatiques polycycliques, qui évite l'encrassement de canalisations ou une pollution de l'environnement par ces goudrons.

Ce but est atteint grâce à un procédé selon la revendication 1.

Par rapport à d'autres techniques de lavage de gaz, le lavage par pulvérisation permet de limiter la perte de charge et de minimiser la formation de dépôts de goudrons sur des parois, comme cela pourrait être le cas avec l'utilisation de colonnes de lavage à plateaux.

L'huile de lavage utilisée doit rester en phase liquide pendant le processus de lavage afin de ne pas produire de vapeur entraînée par le gaz effluent. Dans le cas notamment de gaz effluent de four de dépôt ou d'infiltration chimique en phase gazeuse, la pression du gaz effluent en sortie du four est relativement faible. L'huile de lavage doit donc présenter une faible tension de vapeur, inférieure à 100 Pa à 0°C.

En outre, la composition de l'huile doit permettre une bonne absorption des goudrons à piéger. C'est pourquoi, on choisit une huile minérale de type aromatique à faible teneur en HAP, et capable d'absorber et de dissoudre des HAP.

Selon une particularité du procédé, le lavage du gaz effluent est réalisé par injection de l'huile dans un courant de gaz effluent parcourant une colonne de pulvérisation, par exemple une colonne à venturi.

Avantageusement, l'huile circule en continu entre un bac de recirculation recueillant l'huile chargée d'HAP et au moins une buse de pulvérisation d'huile dans un courant de gaz effluent. L'huile est de préférence refroidie par passage dans un échangeur de chaleur sur son trajet entre le bac et la ou les buses de pulvérisation.

Selon une autre particularité du procédé, le pompage du gaz effluent est réalisé par passage du gaz lavé dans au moins un éjecteur-condenseur à vapeur. Avantageusement, au moins une partie du gaz issue de l'éjecteur-condenseur est utilisée comme gaz de combustion pour un dispositif de production de la vapeur alimentant l'éjecteur-condenseur.

Avantageusement encore, le condensat en sortie de l'éjecteur-condenseur est traité par passage sur charbon actif afin de récupérer des hydrocarbures légers, notamment benzéniques, et un reliquat éventuel d'HAP contenu dans le condensat.

Le brevet décrit encore une installation de traitement de gaz effluent permettant la mise en œuvre du procédé ci-dessus défini.

Ce but est atteint grâce à une installation qui comporte un dispositif de pompage du gaz, et un dispositif de lavage à l'huile interposé entre une entrée de gaz effluent à traiter et le dispositif de pompage, et dans laquelle le dispositif de lavage à l'huile comprend une colonne de pulvérisation reliée à l'entrée du gaz effluent afin de permettre la circulation de celui-ci dans la colonne, et des moyens d'injection d'huile dans la colonne de pulvérisation.

La colonne de pulvérisation peut être une colonne à venturi.

Selon une particularité de l'installation, le dispositif de lavage comporte un bac de recirculation d'huile ayant : une entrée reliée à la colonne de pulvérisation ; une sortie d'huile reliée aux moyens d'injection d'huile dans la colonne afin de faire circuler l'huile en continu entre le bac de recirculation, les moyens d'injection d'huile et la colonne de pulvérisation ; et une sortie de gaz lavé reliée au dispositif de pompage.

Avantageusement, le dispositif de lavage comporte un échangeur de chaleur placé sur le trajet du gaz effluent en aval de la colonne de pulvérisation et des moyens pour alimenter l'échangeur de chaleur par un fluide de refroidissement.

Avantageusement encore, le dispositif de lavage comporte un échangeur de chaleur placé entre la sortie d'huile et les moyens d'injection d'huile afin de refroidir l'huile avant injection dans la colonne.

Selon une autre particularité de l'installation, le dispositif de pompage comporte au moins un éjecteur-condenseur à vapeur.

Avantageusement, la vapeur est produite par une chaudière ayant des moyens d'alimentation en gaz combustible reliés à une sortie de gaz de l'éjecteur-condenseur.

L'éjecteur-condenseur peut être du type à condenseur indirect. Des moyens de traitement de condensat issu de l'éjecteur-condenseur sont de préférence prévus afin de récupérer des hydrocarbures qui y sont contenus, par exemple des moyens d'absorption sur charbon actif.

En variante, l'éjecteur-condenseur peut être du type à condenseur direct. Les condensats issus du condenseur peuvent être alors traités par passage dans une tour de stripage.

### Brève description du dessin

L'invention sera mieux comprise à la lecture de la description faite ci-après, à titre indicatif mais non limitatif, en référence au dessin annexé sur lequel :
- la figure 1 montre une installation industrielle d'infiltration chimique en phase gazeuse munie d'une installation de traitement de gaz effluent apte à mettre en œuvre un procédé selon un mode de réalisation de l'invention ; et
- la figure 2 montre partiellement une installation de traitement de gaz effluent apte à mettre en œuvre un procédé selon un autre mode de réalisation de l'invention.

### Description détaillée de modes de réalisation

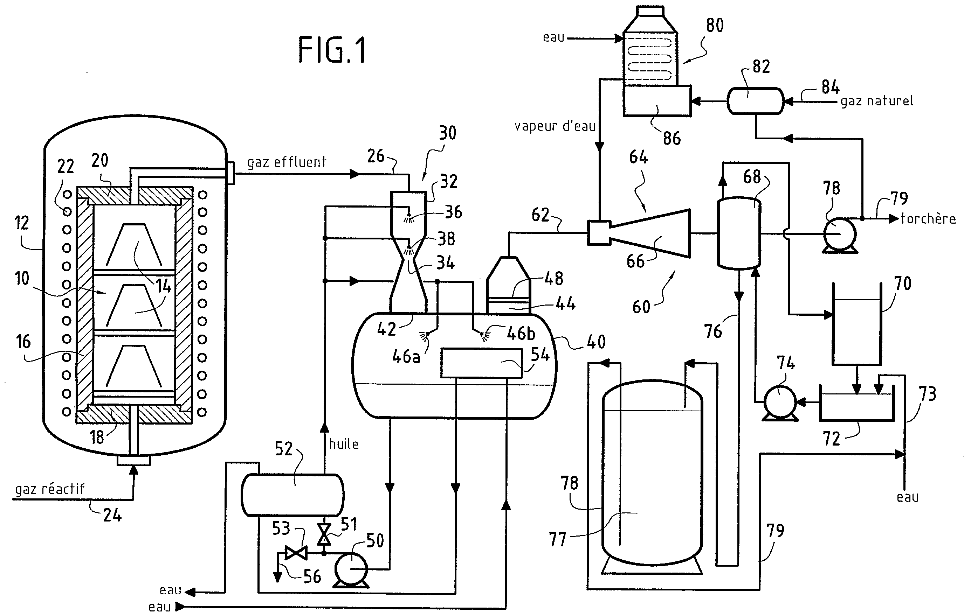

La figure 1 montre de façon très schématique une installation d'infiltration chimique en phase gazeuse plus particulièrement destinée à la densification de substrats poreux par une matrice en carbone pyrolytique.

Un four 10 logé dans une enveloppe 12 reçois des substrats poreux à densifier 14, par exemple des préformes fibreuses de pièces à réaliser en matériau composite à matrice carbone.

Le four 10 est délimité par une paroi 16 formant induit, ou suscepteur, par exemple en graphite, ainsi que par un fond 18 et un couvercle 20. Le suscepteur 16 est couplé avec un inducteur 22, le chauffage du four étant assuré essentiellement par radiation du suscepteur chauffé par couplage inductif avec l'inducteur.

Un gaz réactif est introduit par une conduite 24 à travers par exemple le fond 18 du four. Le gaz réactif comporte un ou plusieurs précurseurs de carbone sous forme gazeuse, notamment du méthane et/ou du propane. Le gaz effluent est extrait du four à travers le couvercle 20, par une conduite 26 reliée à un dispositif de pompage qui assure une circulation du gaz dans le four et maintient la pression réduite voulue à l'intérieur de celui-ci.

Une telle installation est bien connue en elle-même de sorte qu'une description plus détaillée est inutile.

Une matrice de carbone pyrolytique est formée au sein de la porosité des substrats par décomposition du ou des précurseur(s) gazeux. Des sous-produits de réaction sont aussi formés qui sont recueillis dans le gaz effluent avec la fraction de gaz réactif qui n'a pas réagi et avec le gaz hydrogène H₂ provenant de la décomposition du précurseur gazeux du carbone.

Les sous-produits de réaction comportent notamment les composés organiques suivants :
- reliquat de gaz réactif et gaz hydrogène ;
- hydrocarbures insaturés, principalement éthylène et acétylène ; ils ne posent pas de problèmes particuliers pouvant être brûlés en sortie ;
- hydrocarbures benzéniques (BTX), tels que benzène, toluène, xylène ;
- hydrocarbures aromatiques polycycliques, tels que naphtalène, pyrène, anthracène, acénaphtylène,...

Ces derniers (HAP) sont les plus gênants en raison de leur température de solidification élevée qui facilite leur condensation et le dépôt de goudrons dans des conduites en sortie du four dès que la température du gaz effluent décroît.

Aussi, une installation de traitement de gaz effluent est prévue qui comporte un dispositif 30 de lavage à l'huile du gaz effluent interposé entre la sortie de gaz effluent du four 10 et le dispositif de pompage 60.

Le dispositif 30 de lavage à l'huile comprend une colonne de pulvérisation 32 qui est reliée à la conduite 26, à sa partie supérieure. La colonne 32 est une colonne à venturi 34 formé par une restriction de la section de passage pour le gaz. A sa partie inférieure, la colonne 32 communique avec une entrée de gaz 42 formée dans la paroi supérieure d'un bac 40 de recirculation d'huile, au voisinage d'une extrémité de celui-ci. Une sortie de gaz 44 s'ouvre également dans la paroi supérieure du bac 40, au voisinage de l'autre extrémité, et communique par une conduite 62 avec le dispositif de pompage 60.

Une sortie d'huile est formée à la partie inférieure du bac 40 et est reliée à une pompe 50 qui extrait l'huile du bac 40 pour alimenter des buses 36, 38 disposées sensiblement axialement dans la colonne 32, en passant par un échangeur de chaleur 52. Des buses supplémentaires 46a, 46b peuvent être disposées dans le bac 40, les buses 46a, 46b étant alimentées en huile en aval de l'échangeur 52, en parallèle avec les buses 36, 38.

L'échangeur de chaleur 52 est parcouru par un fluide de refroidissement, par exemple de l'eau froide, afin de refroidir l'huile issue du bac 40. L'eau de refroidissement parcourt aussi un échangeur 54, par exemple sous forme de plaques, qui est en série avec l'échangeur 52 et est disposé à l'intérieur du bac 40.

L'échangeur 54, de même que les buses 46a, 46b, sont logés dans le bac entre l'entrée du gaz 42 et la sortie de gaz 44, au-dessus du niveau de l'huile.

Un dévésiculeur 48 peut être monté à la sortie de gaz 44 du bac 40.

Le fonctionnement du dispositif de lavage à l'huile 30 est le suivant.

L'huile amenée aux buses 36, 38 est pulvérisée dans le courant de gaz effluent traversant la colonne 32, cette pulvérisation étant favorisée par l'accroissement de vitesse du gaz dû à la présence du venturi 34. L'une 35 des buses peut être prévue à la partie supérieure de la colonne 32 en amont du venturi, et l'autre buse 38 à proximité du col du venturi. On pourra utiliser une seule buse 36 ou 38.

L'huile pulvérisée absorbe une grande partie des goudrons véhiculés par le gaz effluent, en particulier les hydrocarbures aromatiques polycycliques (HAP), qui sont entraînés dans le bain d'huile contenu dans la base 40.

L'huile utilisée doit présenter une tension de vapeur suffisamment faible pour ne pas se vaporiser à la pression régnant en sortie du four 10, afin de ne pas charger le gaz effluent de vapeur d'huile. A titre indicatif, la pression dans le four 10 lors de différentes phases du processus d'infiltration peut être inférieure à environ 0,2 kPa. L'huile doit en outre présenter une viscosité suffisamment basse pour être mise en circulation et former un brouillard en sortie des buses.

L'huile est pour ces raisons de préférence une huile minérale de type aromatique. L'huile présente une tension de vapeur inférieure à 100 Pa à 0°C, et capable d'absorber et de dissoudre des HAP.

Une huile à base de xylènes, telle que l'huile de synthèse commercialisée sous la dénomination « Jaritherm AX 320 » par la société française Elf Atochem et constituée à 85 % en poids de mono-xylyxylène et à 15 % en poids de di-xylyxylène, s'est révélée efficace. Cette huile a une viscosité de 60 centipoises à 0°C et une tension de vapeur à 0°C inférieure à 100 Pa.

Par comparaison, une huile à base de paraffine s'est révélée inefficace en raison de son incapacité à dissoudre les HAP.

Les échangeurs de chaleur 52 et 54 sont alimentés par de l'eau froide à une température proche de 0°C afin de refroidir au maximum l'huile injectée par les buses 36, 37, ainsi que par les buses 46a, 46b sur le trajet entre l'entrée et la sortie de gaz du bac 40.

L'échangeur 54 contribue à favoriser la condensation de goudrons encore présents dans le gaz effluent en sortie de la colonne 32.

Le dévésiculeur 48, par exemple de type à chicanes, contribue à « casser » un brouillard présent en sortie du bac 40 pour séparer les goulettes et provoquer leur coalescence afin de les recueillir dans le bain d'huile.

Une vidange au moins partielle du bac peut être réalisée en sortie de la pompe 50 en fermant une vanne 51, et en ouvrant une vanne 53 montée sur une conduite reliant la sortie de la sortie de la pompe 50 à une sortie 56 d'huile usagée. L'huile usagée recueillie peut être détruite par incinération, et de l'huile propre est ajoutée dans le bac 40.

Le piégeage par le dispositif de lavage à l'huile 30 permet d'éliminer un maximum de goudrons tels que les HAP. Seuls des hydrocarbures aromatiques plus légers (benzènes, hydrocarbures monocycliques) peuvent subsister dans le gaz effluent lavé, mais ils ne présentent pas de risque d'encrassement de conduites en raison de leur tension de vapeur plus élevée.

Le dispositif de pompage 60 comprend un éjecteur-condenseur 64, ou plusieurs éjecteurs-condenseurs semblables disposés en série (un seul étant montré sur la figure).

L'éjecteur-condenseur 64 comprend une partie éjecteur 66 alimenté en vapeur d'eau par une chaudière 80, et une partie condenseur 68 située en aval de l'éjecteur. Le condenseur 68 est un condenseur indirect, le gaz issu de l'éjecteur étant amené au contact de conduites parcourues par un fluide de refroidissement, par exemple de l'eau froide.

Après passage dans le condenseur 68, l'eau est amenée à une tour de refroidissement 70 d'où elle peut être recueillie dans un bac 72 dans lequel de l'eau de complément est ajoutée par une conduite 73, pour réaliser une circulation continue par une pompe 74 insérée sur une conduite reliant le bac 72 au condenseur 68.

Le condensat recueilli sur une conduite 76 en sortie du condenseur contient des hydrocarbures benzéniques (BTX) tels que benzène, toluène, xylène et un éventuel reliquat de HAP dissous dans l'eau provenant de la condensation de la vapeur de l'éjecteur 66. Le condensat est traité par adsorption par un lit fixe 77 de charbon actif contenu dans une colonne d'adsorption 78. La conduite 76 est raccordée au sommet de la colonne 78 et l'eau épurée recueillie au bas de la colonne peut être acheminée par une conduite 79 vers le bac 72. Plusieurs colonnes d'adsorption à lit de charbon actif pourront être placées en série.

En sortie du condenseur, le gaz effluent passe dans une pompe 78. On pourra utiliser une pompe à anneau d'eau refroidie par échangeur de manière que le gaz extrait de l'installation de traitement soit pratiquement à température ambiante.

Le gaz extrait contient essentiellement des hydrocarbures insaturés en plus du reliquat de gaz réactif et du gaz hydrogène H2 provenant du four 10. Il peut être dirigé vers une torchère par une conduite 79 et être au moins en partie utilisé comme gaz combustible pour la chaudière 80. Dans ce dernier cas, il est mélangé, dans un ballon tampon 82, avec un combustible gazeux, tel que du gaz naturel, amené paru ne conduite 84. Le ballon tampon 82 alimente les brûleurs 86 de la chaudière 80.

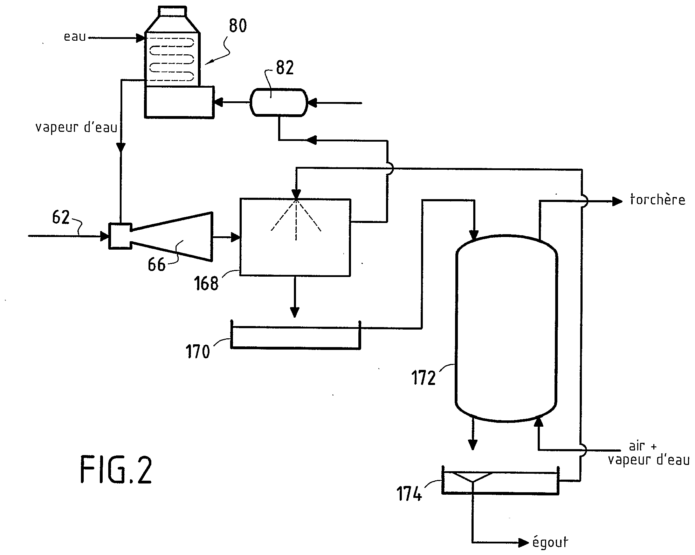

En variante, comme illustré par la figure 2, l'éjecteur-condenseur 64 (ou chacun d'entre eux lorsque plusieurs sont disposés en série) comprend un condenseur direct 168 (et non un condenseur indirect) en aval de l'éjecteur 66. Les éléments communs aux modes de réalisation de s figures 1 et 2 portent les mêmes références et ne seront pas décrits en détail ci-après.

Le flux issu de l'éjecteur 66 est amené dans le condenseur 168 au contact direct d'eau de refroidissement.

Les condensats et l'eau de refroidissement sont recueillis dans une cuve 170 pour être ensuite amenés à une tour de stripage 172. Les gaz issus du condenseur 168 sont acheminés vers le ballon tampon 82.

La tour de stripage 172 est alimentée en vapeur d'eau et d'air. La vapeur d'eau peut être prélevée en sortie de la chaudière 80, celle-ci étant alors dimensionnée pour alimenter l'éjecteur 66 et la tour de stripage.

Les gaz issus de la tour de stripage, comprenant de l'air, de la vapeur d'eau, des hydrocarbures benzéniques et éventuellement un peu de naphtalène sont dirigés vers une torchère.

Les effluents liquides de la tour de stripage sont recueillis dans un bac 174. Il s'agit essentiellement d'eau qui est recyclée vers le condenseur 168 pour servir d'eau de refroidissement. Le surplus recueilli contenant une très faible quantité d'hydrocarbures benzéniques peut être rejeté à l'égout.

Bien que l'on ait envisagé ci-avant l'application de l'invention à un four de densification de substrats poreux par une matrice de carbone pyrolytique par infiltration chimique en phase gazeuse, il apparaît immédiatement que l'invention est applicable à un four industriel de revêtement de substrats par du carbone pyrolytique par dépôt chimique en phase gazeuse et, plus généralement, à des installations industrielles utilisant des hydrocarbures et rejetant des effluents gazeux contenant des goudrons tels que des HAP, comme ce peut notamment être le cas pour des fours de cémentation.

Les tableaux ci-après donnent les résultats d'analyse d'huile et d'eau effectués après diverses périodes de fonctionnement d'une installation telle que celle de la figure 1.

Le tableau I donne la composition de l'huile de lavage à l'origine (temps d'utilisation = 0), après 1 231 h de fonctionnement de l'installation et après 2 137 h de fonctionnement. Sont également indiqués les volumes d'huile initiaux et relevés ensuite, ainsi que la masse de HAP absorbés.

On constate la grande capacité d'absorption par l'huile de lavage, celle-ci étant l'huile « Jaritherm AX320 » déjà évoquée.

Le tableau II donne les quantités d'hydrocarbures mesurées dans l'eau en entrée et en sortie de la colonne 78 de filtration par adsorption sur charbon actif, après 3 500 h de fonctionnement de l'installation. Sont également indiqués l'indice phénol, le pH, la turbidité, le carbone organique total (COT) et les matières en suspension.

On constate l'efficacité du filtrage sur charbon actif pour éliminer les résidus de HAP et d'hydrocarbures benzéniques des condensats issus du condenseur 68.

**TABLEAU I**

| | Résultats analyse huile | | |
|---|---|---|---|
| temps utilisation (h) | 0 | 1231h | 2137h |
| HAP | | | |
| Naphtalène | 15,0 | 33500 | 40500 |
| Acénaphthylène | 1,0 | 30400 | 52000 |
| Acénaphtène | 0,1 | 828 | 1420 |
| Fluorène | 0,2 | 12200 | 19400 |
| Phénanthrène | 1,2 | 8600 | 11800 |
| Anthracène | 1,2 | 3060 | 4420 |
| Fluoranthène | 7,1 | 3400 | 4900 |
| Pyrène | 3,0 | 8600 | 12000 |
| Benzo (a) anthracène | 1,4 | 282 | 445 |
| Chrysène | 75,0 | 140 | 192 |
| Benzo (b) fluoranthène | 30,0 | 162 | 324 |
| Benzo (k) fluoranthène | 0,3 | 111 | 206 |
| Benzo (a) pyrène | 1,3 | 697 | 1335 |
| Dlbenzo (a,h) anthracène | 0,5 | 160 | 198 |
| Indéno (1,2,3,od) pyrène | 0,3 | 504 | 1114 |
| Benzo (ghi) perylène | 0,7 | 192 | 573 |
| | | | |
| total HAP (mg/l) | 138,3 | 102836 | 150827 |
| | | | |
| Hydrocarbures benzéniques (mg/l) | | | |
| Benzène | - | 530 | 670 |
| Toluène | - | 110 | 110 |
| Ethyl benzène | - | 20 | 20 |
| Xylènes | - | 20 | 20 |
| | - | | |
| total hydrocarbures benzéniques (mg/l) | 0,0 | 680 | 820 |
| | | | |
| Hydrocarbures totaux (mg/l) | 138,3 | 103516 | 151647 |
| | | | |
| volume Initial huile (l) | 800 | 800 | 800 |
| volume relevé (l) | 800 | 901 | 942 |
| Variation de volume (l) | 0 | 101 | 142 |
| | | | |
| Masse de HAP (kg) | 0,11 | 98,65 | 138,79 |

**TABLEAU II**

| | **Résultats analyse eau** | |
|---|---|---|
| | Avant filtre | Après filtre |
| HAP (µg/l) | | |
| Naphtalène | 9710 | 0,1 |
| Acénaphtylène | 1730 | 1 |
| Anthracène | 226 | 0,1 |
| Benzo (a) pyrène | 38 | 0,1 |
| Dibenzo (a,h) anthracène | 8,4 | 0,1 |
| Indéno (1,2,3,cd) pyrène | 16 | 0,1 |
| | | |
| total HAP (µg/l) | 11728,4 | 1,5 |
| | | |
| Hydrocarbures benzéniques (µg/l) | | |
| Benzène | 15400 | <10 |
| Toluène | 1000 | <10 |
| Ethyl benzène | 1000 | <10 |
| Xylènes | 1000 | <10 |
| | | |
| total hydrocarbures benzéniques (µg/l) | 18400 | <40 |
| | | |
| Hydrocarbures Totaux (µg/l) | 30128,4 | <41.5 |
| | | |
| indice phénol | <75 | <10 |
| | | |
| pH | 7,25 | 7,55 |
| Turbidité (NTU) | 7,3 | 1 |
| COT (mg/l) | 5,2 | 0,55 |
| Matières en suspension (mg/l) | 2 | 0,3 |

## Revendications

1. Procédé pour le traitement de gaz effluent contenant des hydrocarbures, **caractérisé en ce que** le gaz effluent est soumis à un lavage par pulvérisation d'huile de type aromatique ayant une tension de vapeur inférieure à 100 Pa à 0°C et capable d'absorber et de dissoudre des hydrocarbures aromatiques polycycliques, afin de piéger des hydrocarbures aromatiques polycycliques, avant passage dans un dispositif de pompage.

2. Procédé selon la revendication 1, **caractérisé en ce que** le lavage du gaz effluent est réalisé par injection de l'huile dans un courant de gaz effluent parcourant une colonne de pulvérisation.

3. Procédé selon l'une quelconque des revendications 1 et 2, **caractérisé en ce que** l'huile circule en continu entre un bac de recirculation recueillant l'huile chargée d'hydrocarbures aromatiques polycycliques et au moins une buse de pulvérisation d'huile dans un courant de gaz effluent.

4. Procédé selon la revendication 3, **caractérisé en ce que** l'huile est refroidie sur son trajet entre le bac de recirculation et la ou les buses de pulvérisation.

5. Procédé selon l'une quelconque des revendications 1 à 4, **caractérisé en ce que** l'on choisit une huile à base de xylènes.

6. Procédé selon l'une quelconque des revendications 1 à 5, **caractérisé en ce que** le pompage du gaz effluent est réalisé par passage du gaz dans au moins un éjecteur-condenseur à vapeur du type à condenseur indirect.

7. Procédé selon la revendication 6, **caractérisé en ce que** les condensats issus de l'éjecteur-condenseur sont traités par passage sur charbon actif afin de récupérer des hydrocarbures légers et un reliquat éventuel d'hydrocarbures aromatiques polycycliques.

8. Procédé selon l'une quelconque des revendications 1 à 5, **caractérisé en ce que** le pompage du gaz effluent est réalisé par passage dans au moins un éjecteur-condenseur à vapeur du type à condenseur direct.

9. Procédé selon la revendication 8, **caractérisé en ce que** les condensats issus de l'éjecteur-condenseur sont traités par passage dans une tour de stripage.

10. Procédé selon l'une quelconque des revendications 6 à 9, **caractérisé en ce qu'**une partie au moins du gaz lavé issu de l'éjecteur-condenseur est utilisé comme gaz de combustion pour un dispositif de production de la vapeur alimentant l'éjecteur-condenseur.

## Patentansprüche

1. Verfahren zur Behandlung von Abgas, das Kohlenwasserstoffe enthält, **dadurch gekennzeichnet, dass** das Abgas vor dem Leiten in eine Pumpvorrichtung einer Wäsche durch Sprühen eines Öls vom aromatischen Typ unterzogen wird, das einen Dampfdruck von weniger als 100 Pa bei 0 °C aufweist und dazu in der Lage ist, aromatische polycyclische Kohlenwasserstoffe zu absorbieren und zu lösen, um aromatische polycyclische Kohlenwasserstoffe einzufangen.

2. Verfahren nach Anspruch 1, **dadurch gekennzeichnet, dass** die Wäsche des Abgases durch Einspritzen des Öls in einen Abgasstrom, der eine Sprühkolonne durchströmt, durchgeführt wird.

3. Verfahren nach einem der Ansprüche 1 und 2, **dadurch gekennzeichnet, dass** das Öl kontinuierlich zwischen einem Rezirkulationstank, der das mit aromatischen polycyclischen Kohlenwasserstoffen beladene Öl sammelt, und mindestens einer Düse zum Sprühen von Öl in einem Abgasstrom zirkuliert.

4. Verfahren nach Anspruch 3, **dadurch gekennzeichnet, dass** das Öl auf seinem Weg zwischen dem Rezirkulationstank und der oder den Sprühdüse/n gekühlt wird.

5. Verfahren nach einem der Ansprüche 1 bis 4, **dadurch gekennzeichnet, dass** ein Öl auf der Basis von Xylolen gewählt wird.

6. Verfahren nach einem der Ansprüche 1 bis 5, **dadurch gekennzeichnet, dass** das Pumpen des Abgases durch Leiten des Gases in mindestens einen Dampf-Ejektor/Kondensator vom indirekten Kondensatortyp durchgeführt wird.

7. Verfahren nach Anspruch 6, **dadurch gekennzeichnet, dass** die aus dem Ejektor/Kondensator kommenden Kondensate durch Leiten auf Aktivkohle behandelt werden, um leichte Kohlenwasserstoffe und einen etwaigen Rest an aromatischen polycyclischen Kohlenwasserstoffen wiederzugewinnen.

8. Verfahren nach einem der Ansprüche 1 bis 5, **dadurch gekennzeichnet, dass** das Pumpen des Abgases durch Leiten in mindestens einen Dampf-Ejektor/Kondensator vom direkten Kondensatortyp durchgeführt wird.

9. Verfahren nach Anspruch 8, **dadurch gekennzeichnet, dass** die aus dem Ejektor/Kondensator kommenden Kondensate durch Leiten in einen Strippturm behandelt werden.

10. Verfahren nach einem der Ansprüche 6 bis 9, **dadurch gekennzeichnet, dass** mindestens ein Teil des aus dem Ejektor/Kondensator kommenden gewaschenen Gases als Verbrennungsgas für eine Dampfproduktionsvorrichtung, die den Ejektor/Kondensator speist, verwendet wird.

## Claims

1. A method of treating effluent gas containing hydrocarbons, the method being **characterized in that** the effluent gas is subjected to washing by spraying aromatic type oil having a vapor pressure of less than 100 Pa at 0°C and being capable of absorbing and dissolving polycyclic aromatic hydrocarbons, for the purpose of trapping polycyclic aromatic hydrocarbons, prior to passing through pumping apparatus.

2. A method according to claim 1, **characterized in that** the effluent gas is washed by injecting oil into a stream of effluent gas travelling along a spray column.

3. A method according to claim 1 or claim 2, **characterized in that** the oil circulates continuously between a recirculation tank collecting oil loaded with polycyclic aromatic hydrocarbons and at least one nozzle for spraying oil into the effluent gas stream.

4. A method according to claim 3, **characterized in that** the oil is cooled on its path between the recirculation tank and the spray nozzle(s).

5. A method according to any one of claims 1 to 4, **characterized in that** the oil selected is based on xylenes.

6. A method according to any one of claims 1 to 5, **characterized in that** the effluent gas is pumped by passing the gas through at least one steam ejector-condenser of the indirect condenser type.

7. A method according to claim 6, **characterized in that** the condensate from the ejector-condenser is treated by being passed over activated carbon in order to recover light hydrocarbons and any residual polycyclic aromatic hydrocarbons.

8. A method according to any one of claims 1 to 5, **characterized in that** the effluent gas is pumped by being passed through at least one steam ejector-condenser of the direct condenser type.

9. A method according to claim 8, **characterized in that** the condensate from the ejector-condenser is treated by passing through a stripping tar.

10. A method according to any one of claims 6 to 9, **characterized in that** at least a portion of the washed gas coming from the ejector-condenser is used as fuel gas for a device for producing steam feeding the ejector-condenser.
